# EUROPEAN PATENT SPECIFICATION

(11) **EP 2 158 149 B1**
(45) Date of publication and mention of the grant of the patent: **13.11.2013**
(21) Application number: 07783625.2
(22) Date of filing: 11.05.2007
(51) Int. Cl.: B66B 7/06, G01N 27/00, B66B 5/00, B66B 7/12

(54) **ELEVATOR LOAD BEARING ASSEMBLY HAVING AN INITIAL FACTOR OF SAFETY BASED UPON A DESIRED LIFE OF SERVICE**
AUFZUGSTRAGMITTELVORRICHTUNG MIT ANFANGSSICHERHEITSFAKTOR BASIEREND AUF EINE ERWÜNSCHTE LEBENSDAUER
ENSEMBLE DE PALIERS D'ASCENSEUR A FACTEUR INITIAL DE SECURITE FONCTION DE LA DUREE DE SERVICE DESIREE

(43) Date of publication of application: 03.03.2010
(73) Proprietor: Otis Elevator Company, Farmington, CT 06032-2568 (US)
(72) Inventor: FARGO, Richard N., Plainville, CT 06062 (US); MONCINI, Raymond J., Southington, CT 06489 (US)
(74) Representative: Leckey, David Herbert
(86) International application number: PCT/US2007/068731
(87) International publication number: WO 2008/140520

(56) References cited:
- JP-A- 6 263 392
- JP-A- 2001 019 298
- US-A- 5 834 942

## Description

### BACKGROUND

Elevator systems sometimes include a load bearing assembly that couples an elevator car to a counterweight. Traditional load bearing assemblies have included several steel ropes that support the weight of the elevator car and the counterweight. There are known elevator codes that dictate the design of a load bearing assembly.

Current codes require a minimum factor of safety, which is based upon the expected rope speed of movement during elevator system operation and whether the elevator is intended as a passenger or freight elevator. The factor of safety according to some codes is typically based upon the actual rope speed corresponding to the rated speed of the elevator car. Traditionally, the factor of safety has been calculated using the formula f= S x N/W; where N is the number of runs of rope under load, S is the rope manufacturer's rated braking strength of one rope and W is the maximum static load imposed on all car ropes with the car and its rated load at any position in the hoistway. According to other codes, the factor of safety is independent of speed. One such example requires a factor of safety of at least 12 if three or more ropes are used and at least 16 if two ropes are used.

Accordingly, elevator systems have been designed to include a load bearing assembly or roping arrangement that has a minimum factor of safety at installation that satisfies the applicable code requirement. While this approach has proven useful, there are certain limitations and drawbacks. For example, many elevator systems could be safely operated for many years using a load bearing assembly having a factor of safety that is below the amount required by code. The code requirement in such circumstances results in additional, unnecessary added strength to the load bearing assembly, which results in additional cost for the elevator system provider and the customer. Another drawback associated with the traditional approach is that it is not capable of recognizing the differing needs of different situations. Very high usage elevators typically require roping replacements much sooner than lower usage elevators when the same factor of safety is used at the installation of both types of systems. This results in a less predictable schedule for any required roping replacements.

One consideration that accounts for the code-required initial factor of safety is that traditional steel rope elevator load bearing assemblies are inspected on an annual basis using a manual inspection process. A technician inspects the individual steel ropes by observing any breaks in any individual cords along the surface of a rope. This process has been performed on an annual basis because it is relatively time consuming, labor intensive and expensive. A technician typically looks at an entire rope and manually feels the rope exterior to detect any breaks. The typical over-design of a load bearing assembly providing it with a larger-than-necessary factor of safety at installation has been based, at least in part, on the fact that rope inspection procedures are relatively infrequent coupled with a desire to ensure adequate load bearing assembly strength during elevator system usage.

More recently, other elevator roping inspection techniques have been introduced. Examples are shown in the following documents: U.S. Patent Nos. 6,633,159; 7,123,030; and 7,117,981 and in the published applications WO 2005/094250, WO 2005/09428; and WO 2005/095252. As described in some of those documents, part of the reason for introducing such new techniques is that new types of elevator load bearing members have been proposed. Polymer ropes and flat belts are now used in some elevator systems in place of the traditional, steel ropes. Some of the inspection techniques described in those documents are useful for more than one type of load bearing member and some are even useful for inspecting traditional steel ropes.

Those skilled in the art are always striving to make improvements in elevator system components and economics associated with elevator systems. It would be useful to be able to design an elevator system load bearing assembly based upon considerations other than the initial factor of safety required by existing codes.

### SUMMARY

A method of designing a load bearing assembly for use in an elevator system in accordance with the invention is set forth in claim 1.

Various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system.

Figure 2 schematically illustrates selected portions of an example load bearing assembly.

Figure 3 is a flowchart diagram summarizing one example approach.

Figure 4 is a graphical illustration of several example relationships between initial factor of safety, service lifespan and retirement strength.

Figure 5 is a graphical illustration of several other example relationships between initial factor of safety, service lifespan and retirement strength.

### DETAILED DESCRIPTION

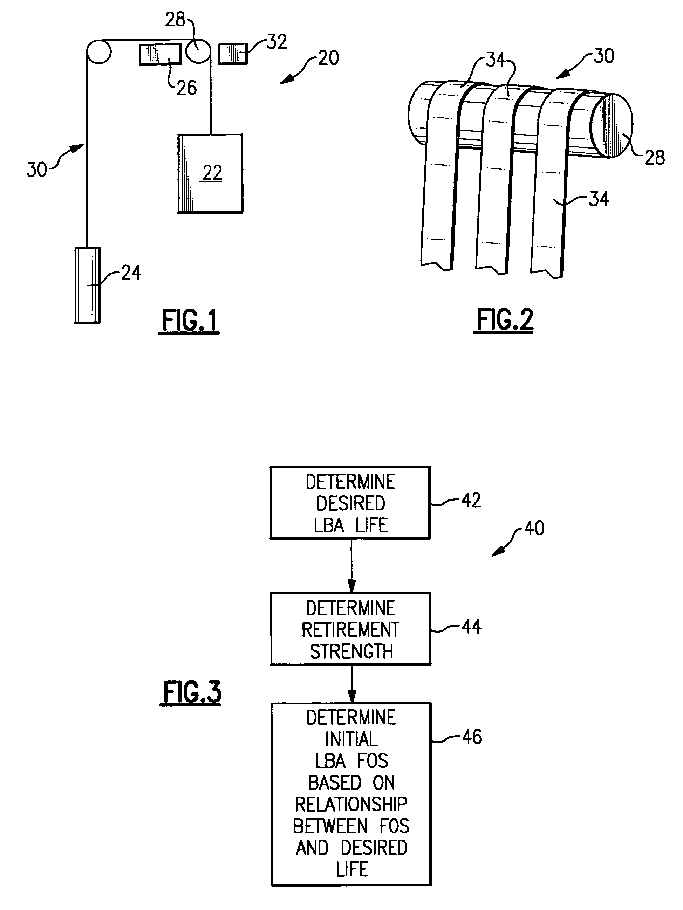

Figure 1 schematically shows selected portions of an elevator system 20. In this example, an elevator car 22 is coupled to a counterweight 24. A drive machine 26 rotates a drive sheave 28 to cause a desired movement of the elevator car 22 in a known manner. An elevator load bearing assembly (LBA) 30 supports the weight of the elevator car 22 and counterweight 24. The LBA 30 moves responsive to movement of the drive sheave 28 to cause the desired movement of the elevator car 22.

The illustrated example includes an LBA monitoring device 32 that provides information regarding a current strength of the LBA 30, which is indicative of the ability of the LBA 30 to support the weight of the car 22 and counterweight 24. In one example, the monitoring device 32 uses a known resistance based inspection technique as disclosed, for example, in the published application numbers WO 2005/094250; WO 2005/09428; and WO 2005/095252. In another example, the LBA monitoring device 32 utilizes a known magnetic flux leakage technique for providing an indication of a current strength of the LBA 30 such as that shown in WO 00/58706. In another example, the LBA monitoring device 32 utilizes visible indications on an exterior of the LBA 30 for purposes of determining a current strength of the LBA 30 as shown in U.S. Patent No. 7,117,981. Another example LBA monitoring device 32 utilizes a monitoring element included within the LBA 30 such as that described in United States Patent No. 5,834,942.

Whether the LBA monitoring device 32 is completely external to the LBA 30 or utilizes one or more components integral to the LBA 30 for purposes of providing an indication of a current strength of the LBA 30, the monitoring device 32 is capable of providing strength information on a regular basis. In one example, the LBA monitoring device 32 provides an indication of a current strength of the LBA 30 on at least a monthly basis. In another example, strength indications are provided on at least a weekly basis. In another example, strength indications regarding the LBA 30 are provided on a daily basis. One example provides multiple strength indications within a single day such as on an hourly basis. Those skilled in the art who have the benefit of this description will be able to customize such indications to meet the needs of their particular situation. For example, the indications may be stored in an elevator monitoring device for periodic review by an elevator technician or they may be automatically sent to a remote location where such data is monitored on some regular basis.

One aspect of including the LBA monitoring device 32 in the elevator system 20 is that it allows for obtaining information regarding a current strength of the LBA 30 on a frequent, regular basis. Such information allows for ensuring that the LBA 30 has a current strength that is at or above a strength necessary to support the elevator car 22 and counterweight 24. In one example, whenever the LBA monitoring device 32 determines that the strength is below a desired level, the corresponding elevator system is automatically shut down and removed from service until corrective action (e.g., rope replacement) occurs.

The illustrated example allows for designing or configuring the LBA 30 in a manner that departs from the traditional technique of selecting an initial factor of safety for the LBA 30 according to elevator codes that have been in use for selecting initial factors of safety for traditional steel roping load bearing assemblies, for example. Instead, with the illustrated example it is possible to select an initial factor of safety for the LBA 30 that is customized to the unique needs of a particular elevator system.

Referring to Figure 2, selected portions of one example LBA 30 are shown. In this example, a plurality of flat belt load bearing members 34 are used. The strength of each load bearing member 34 and the selected number of them provides the initial factor of safety for the LBA 30.

Figure 3 includes a flowchart diagram summarizing one example approach for designing the LBA 30 that includes selecting an initial factor of safety dependent upon a particular elevator system configuration and corresponding desired performance. The flowchart 40 begins at 42 where a determination is made regarding what a desired service life for the LBA 30 should be. The desired service life may be in terms of years or elevator system cycles, for example. At 44, a determination is made regarding a desired retirement strength of the LBA 30 at the end of the desired life determined at 42. The desired retirement strength will provide adequate support to the car 22 and counterweight 24. In some examples, the desired retirement strength corresponds to a strength at which the LBA 30 should be replaced before continued use would be associated with a degradation in the strength of the LBA 30 below a level that is expected or suitable for supporting the car 22 and counterweight 24 in a desired manner during elevator system operation. In most cases the desired retirement exceeds the breaking strength at which the LBA 30 would no longer provide adequate support for normal elevator system operation.

At 46, an initial factor of safety for the LBA 30 is determined based upon a relationship between the desired life determined at 42 and the factor of safety. This approach to selecting the initial factor of safety allows for customizing the design of the LBA 30 to meet the particular needs of an elevator system supplier or a customer (e.g., building owner) that will provide a desired service life, adequate LBA performance throughout that service life and satisfying a desire for an economically efficient LBA 30. With this example approach, it is possible to determine an initial factor of safety in a manner that allows for choosing a more expensive LBA 30 to accommodate the particular elevator system performance characteristics or a particular service life or choosing a less expensive LBA 30 because of different elevator system performance expectations or a willingness to have a shorter service life, for example. This approach to designing an LBA 30 for a particular elevator installation allows for selecting an initial factor of safety that is different than the factor of safety prescribed by elevator codes.

In some examples, the initial factor of safety will be below that required by the corresponding elevator code. In other examples, the initial factor of safety will exceed that required by the code. In the latter cases, the elevator system may be expected to be used on a more frequent basis compared to other installations. For example, a high rise casino may experience significant elevator traffic throughout an entire 24 hour period whereas a high rise office building typically will only have elevator traffic during normal business hours. The disclosed example allows for customizing the initial factor of safety based upon such considerations.

In one example, the initial factor of safety is selected from among potential factors of safety having determined relationships to the desired life of the LBA. On example includes utilizing testing equipment to develop relationships between initial factor of safety, the load or tension characteristics of the elevator system (e.g., the load associated with the elevator car and counterweight and the corresponding tension on the load bearing members of the LBA), the size and number of sheaves used to direct the LBA's movement and the number of cycles or amount of time that it takes for the LBA to reach a particular retirement strength. Another example includes gathering such information by observing actual elevator system operation. Empirically determining information for a variety of different LBA configurations (e.g., different initial factors of safety) based upon a particular elevator system arrangement and a selected retirement strength allows for determining a relationship between initial factor of safety, desired service life of the LBA and the desired retirement strength at the end of that service life.

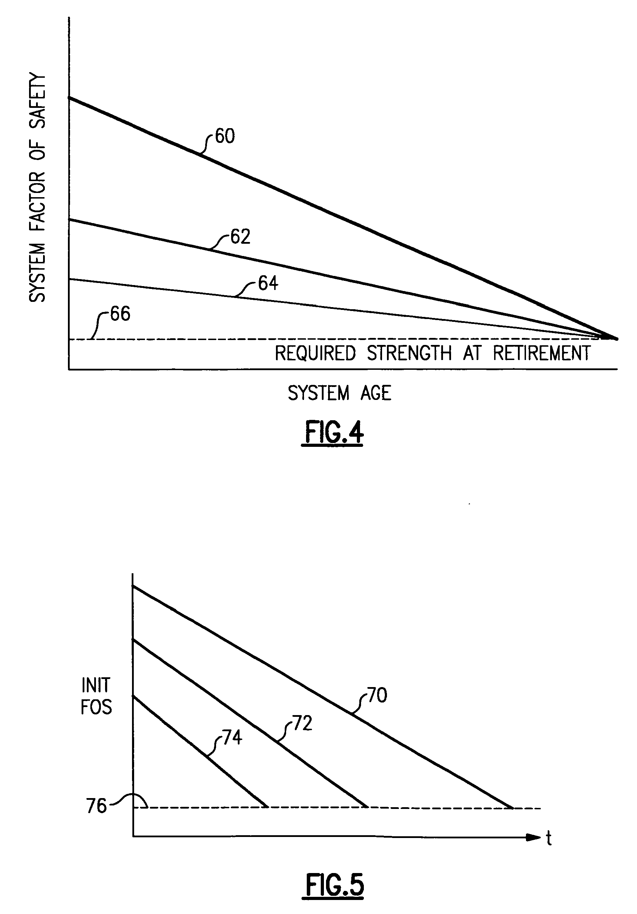

Figure 4 graphically illustrates one example approach. In this example, testing equipment is used to run an LBA through multiple cycles corresponding to expected elevator system performance during the expected operation. In this example, three different LBA configurations were tested resulting in three different curves shown at 60, 62 and 64, respectively. The curve 60 corresponds to an LBA having the highest initial factor of safety of the three tested arrangements. In one example, curve 60 corresponds to an initial factor of safety equal to 17. The curve 64 indicates the performance of the LBA having the lowest initial factor of safety of the three selected samples. In one example, the LBA of curve 62 has an initial factor of safety equal to 12 and the LBA of the curve 64 has an initial factor of safety equal to 9. In this example, a desired retirement strength 66 corresponds to the strength of the LBA at the time when it is expected to be replaced. The horizontal axis in Figure 4 indicates time and where the LBA strength reaches the retirement strength 66 indicates the service lifetime of the LBA.

The three different example LBAs in Figure 4 each have the same expected lifetime for reaching the retirement strength value indicated at 66. In one example, the expected lifetime is 20 years. In this example, each LBA is expected to be used in a different manner. The LBA corresponding to the curve 64 was tested as if it were used in a relatively low elevator system usage environment. This may exist, for example, in a building that only experiences significant elevator traffic in the morning and late afternoon or early evening (e.g., an apartment building). The LBA corresponding to the curve 62 was tested as if it were used in a moderate or normal usage situation in which the significant elevator traffic occurs on a more frequent basis than that which is expected for the testing conditions corresponding to the curve 64. The curve 60 corresponds to the results of testing an LBA under conditions that correspond to relatively high usage such as a high rise building where significant elevator traffic is expected throughout much or most of a typical 24 hour period.

The example of Figure 4 shows how one can select an initial factor of safety and corresponding LBA design to achieve a desired lifetime and a selected retirement strength 66 based upon the expected elevator system usage patterns. In this particular example, each LBA will provide the same service life but under different operating conditions (e.g., amount of use in that life span).

Figure 5 shows another example approach. In Figure 5, three different curves 70, 72 and 74, respectively, illustrate the expected performance of a corresponding LBAs with a given initial factor of safety (FOS). In this example, the testing conditions for each LBA were the same. The LBA having the lowest initial factor of safety performs according to the curve 74. As can be appreciated from the illustration, such an LBA design will reach a retirement strength 76 sooner than the other LBA designs having higher initial factors of safety (e.g., the initial load bearing members have a higher strength or more load bearing members are included in the LBA).

Depending on the desire for pricing the LBA and the desired life of the LBA, a system designer or customer may select the initial factor of safety to meet their particular desires. For example, one building owner may desire to save expenses upfront and is willing to pay for an LBA replacement sooner to achieve such savings by selecting an LBA having a lower initial factor of safety. On the other hand, a building owner may not wish to have an LBA replacement for a significantly longer period of time and, therefore, may negotiate having an LBA installed that has a significantly higher factor of safety, which has a corresponding higher cost.

The disclosed example approach allow for individuals involved in an elevator design and installation process to select the LBA characteristics to satisfy the criteria that is most important to them. This is a significant departure from the traditional approach of selecting an LBA having a factor of safety at installation that corresponds to the code requirement for a particular style of elevator system. The code requirements typically only allow for one initial factor of safety based on the operating speeds of a given elevator system.

The example curves of Figures 4 and 5 represent empirical data resulting from testing. The empirical data that provides a relationship between an initial factor of safety and a desired life of an LBA for a selected retirement strength. The relationships graphically illustrated in Figures 4 and 5 present expected performance of an LBA. The example of Figure 1 includes the LBA monitoring device 32 frequently providing an indication of a current strength of the LBA 30 to ensure that the retirement strength has not been reached before the desired life of the LBA has transpired. Providing strength indication information on an ongoing basis (e.g., hourly, daily, weekly, monthly or a combination of these) allows for selecting an initial factor of safety that is different than a code-required amount while still providing a reasonable degree of assurance that the corresponding LBA design is performing in a manner that corresponds to an expectation for reaching the retirement strength near the end of the desired life.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of designing a load bearing assembly (30) for use in an elevator system (20), comprising:
determining a desired life of the load bearing assembly (30);
determining a desired retirement strength of the load bearing assembly (30) at the end of the desired life; and
selecting an initial factor of safety for the load bearing assembly (30) at installation based upon the determined desired life and desired retirement strength.

2. The method of claim 1, comprising
determining at least one relationship between the desired life, the desired retirement strength and the initial factor of safety for each of a plurality of factor of safety values;
determining which of the determined relationships most closely corresponds to the desired life and the desired retirement strength; and
selecting the factor of safety having the most closely corresponding relationship.

3. The method of claim 1, comprising
monitoring a current strength of the load bearing assembly (30) at least once each week to confirm that the current strength exceeds the desired retirement strength; and
providing an indication if the current strength is at or below the desired retirement strength.

4. The method of claim 3, comprising
determining the current strength at least once each day.

5. The method of claim 3, comprising
automatically shutting down the elevator system (20) responsive to determining that the current strength is at or below the desired retirement strength.

6. The method of claim 1, wherein determining the desired life comprises at least one of
determining an expected amount of usage of an associated elevator system (20); determining a size of at least one sheave (28) that will direct the load bearing assembly (30) as an associated elevator car moves; or
determining an expected load on each member (34) of the load bearing assembly (30) for a selected number of members (34) of the load bearing assembly (30).

7. The method of claim 6, wherein determining the desired life comprises
using the determined expected amount of usage and the determined expected load on each load bearing member (34) for determining load bearing assembly strength as a function of a number of cycles of elevator system operation.

8. The method of claim 1, comprising determining the desired life as one of a number of years or a number of cycles of load bearing assembly movement during elevator system operation.

9. The method of claim 1. comprising selecting the initial factor of safety by determining whether an expected usage of an associated elevator system (20) is above, at or below a traditional usage profile.

10. The method of claim 1, comprising selecting the initial factor of safety to be at least one of higher or lower than a corresponding factor of safety required by an applicable code from a region in which the elevator system will be installed.

11. The method of claim 1, comprising selecting the initial factor of safety by selecting a number of load bearing members (34) to be included in the load bearing assembly (30) and selecting a strength of each of the load bearing members (34).

## Patentansprüche

1. Verfahren zur Gestaltung eines Lasttrageaufbaus (30) zur Verwendung in einem Aufzugsystem (20), umfassend:
Bestimmen einer gewünschten Lebensdauer des Lasttrageaufbaus (30);
Bestimmen einer gewünschten Stärke beim Ausmustern des Lasttrageaufbaus (30) am Ende der gewünschten Lebensdauer; und
Wählen eines anfänglichen Sicherheitsfaktors für den Lasttrageaufbau (30) beim Einbau auf Basis der gewünschten Lebensdauer und der gewünschten Stärke beim Ausmustern.

2. Verfahren nach Anspruch 1, umfassend:
Bestimmen wenigstens einer Beziehung zwischen der gewünschten Lebensdauer, der gewünschten Stärke beim Ausmustern und dem anfänglichen Sicherheitsfaktor für jeden von mehreren von Werten von Sicherheitsfaktoren;
Bestimmen, welche der bestimmten Beziehungen der gewünschten Lebensdauer und der gewünschten Stärke beim Ausmustern am nächsten kommt; und
Wählen des Sicherheitsfaktors mit der am nächsten kommenden Beziehung.

3. Verfahren nach Anspruch 1, umfassend:
Überwachen einer gegenwärtigen Stärke des Lasttrageaufbaus (30) wenigstens einmal pro Woche, um zu bestätigen, dass die gegenwärtige Stärke die gewünschte Stärke beim Ausmustern übersteigt; und
Bereitstellen einer Meldung, wenn die gegenwärtige Stärke bei oder unter der gewünschten Stärke beim Ausmustern liegt.

4. Verfahren nach Anspruch 3, umfassend:
Bestimmen der gegenwärtigen Stärke wenigstens einmal pro Tag.

5. Verfahren nach Anspruch 3, umfassend:
automatisches Abschalten des Aufzugsystems (20) als Reaktion auf das Bestimmen, dass die gegenwärtige Stärke bei oder unter der gewünschten Stärke beim Ausmustern liegt.

6. Verfahren nach Anspruch 1, wobei das Bestimmen der gewünschten Lebensdauer wenigstens eines aus dem Folgenden umfasst:
Bestimmen eines erwarteten Ausmaßes der Verwendung eines zugehörigen Aufzugsystems (20);
Bestimmen einer Größe wenigstens einer Seilrolle (28), die den Lasttrageaufbau (30) führen wird, während sich eine zugehörige Aufzugkabine bewegt; oder
Bestimmen einer erwarteten Last auf jedes Element (34) des Lasttrageaufbaus (30) für eine ausgewählte Anzahl von Elementen (34) des Lasttrageaufbaus (30).

7. Verfahren nach Anspruch 6, wobei das Bestimmen der gewünschten Lebensdauer Folgendes umfasst:
Verwenden des bestimmten erwarteten Ausmaßes der Verwendung und der bestimmten erwarteten Last auf jedes lasttragende Element (34), um die Stärke des Lasttrageaufbaus als Funktion einer Anzahl von Zyklen des Betriebs des Aufzugsystems zu bestimmen.

8. Verfahren nach Anspruch 1, umfassend das Bestimmen der gewünschten Lebensdauer als eines aus einer Anzahl von Jahren oder einer Anzahl von Zyklen der Bewegung des Lasttrageaufbaus während des Betriebs des Aufzugsystems.

9. Verfahren nach Anspruch 1, umfassend das Wählen des anfänglichen Sicherheitsfaktors durch Bestimmen, ob eine erwartete Verwendung eines zugehörigen Aufzugsystems (20) über, bei oder unter einem herkömmlichen Verwendungsprofil liegt.

10. Verfahren nach Anspruch 1, umfassend ein derartiges Wählen des anfänglichen Sicherheitsfaktors, dass dieser wenigstens eines aus höher oder niedriger als ein entsprechender Sicherheitsfaktor ist, der durch eine geltende Vorschrift einer Region, in der das Aufzugsystem montiert werden wird, verlangt wird.

11. Verfahren nach Anspruch 1, umfassend das Wählen des anfänglichen Sicherheitsfaktors durch Wählen einer Anzahl von Lasttrageelementen (34), die in dem Lasttrageaufbau (30) aufgenommen werden sollen, und Wählen einer Stärke eines jeden der Lasttrageelemente (34).

## Revendications

1. Procédé de conception d'un ensemble porteur de charge (30) pour utilisation dans un système d'ascenseur (20), comprenant les étapes consistant à :
déterminer une durée de vie souhaitée de l'ensemble porteur de charge (30) ;
déterminer une résistance de mise à la retraite souhaitée de l'ensemble porteur de charge (30) à la fin de la durée de vie souhaitée ; et
sélectionner un facteur initial de sécurité pour l'ensemble porteur de charge (30) dans l'installation sur la base de la durée de vie souhaitée et de la résistance de mise à la retraite souhaitée déterminées.

2. Procédé selon la revendication 1, comprenant les étapes consistant à :
déterminer au moins une relation entre la durée de vie souhaitée, la résistance de mise à la retraite souhaitée et le facteur initial de sécurité pour chacune d'une pluralité de valeurs de facteur de sécurité ;
déterminer laquelle des relations déterminées correspond le plus étroitement à la durée de vie souhaitée et à la résistance de mise à la retraite souhaitée ; et
sélectionner le facteur de sécurité ayant la relation la plus étroitement correspondante.

3. Procédé selon la revendication 1, comprenant les étapes consistant à :
surveiller une résistance courante de l'ensemble porteur de charge (30) au moins une fois chaque semaine pour confirmer que la résistance courante dépasse la résistance de mise à la retraite souhaitée ; et
fournir une indication montrant si la résistance courante se situe au niveau ou en dessous de la résistance de mise à la retraite souhaitée.

4. Procédé selon la revendication 3, comprenant l'étape consistant à :
déterminer la résistance courante au moins une fois chaque jour.

5. Procédé selon la revendication 3, comprenant l'étape consistant à :
arrêter automatiquement le système d'ascenseur (20) en réponse à la détermination que la résistance courante se situe au niveau ou en dessous de la résistance de mise à la retraite souhaitée.

6. Procédé selon la revendication 1, dans lequel la détermination de la durée de vie souhaitée comprend au moins l'une des étapes consistant à :
déterminer une quantité attendue d'usage d'un système d'ascenseur associé (20) ;
déterminer la taille d'au moins une poulie (28) qui dirigera l'ensemble porteur de charge (30) lorsqu'une cabine d'ascenseur associée se déplace ; ou
déterminer une charge attendue sur chaque élément (34) de l'ensemble porteur de charge (30) pour un nombre sélectionné d'éléments (34) de l'ensemble porteur de charge (30).

7. Procédé selon la revendication 6, dans lequel la détermination de la durée de vie souhaitée comprend :
l'utilisation de la quantité d'usage attendue déterminée et de la charge attendue déterminée sur chaque élément porteur de charge (34) pour déterminer la résistance de l'ensemble porteur de charge en fonction d'un certain nombre de cycles de fonctionnement du système d'ascenseur.

8. Procédé selon la revendication 1, comprenant l'étape consistant à déterminer la durée de vie souhaitée par le nombre d'années ou le nombre de cycles de déplacement de l'ensemble porteur de charge au cours du fonctionnement du système d'ascenseur.

9. Procédé selon la revendication 1, comprenant la sélection du facteur de sécurité initial en déterminant si un usage attendu d'un système d'ascenseur associé (20) se situe au-dessus, au niveau ou en dessous d'un profil d'usage traditionnel.

10. Procédé selon la revendication 1, comprenant la sélection du facteur de sécurité initial pour qu'il se situe au moins au-dessus ou au dessous d'un facteur de sécurité correspondant requis par un code applicable d'une région dans laquelle le système d'ascenseur sera installé.

11. Procédé selon la revendication 1, comprenant la sélection du facteur de sécurité initial en sélectionnant un certain nombre d'éléments porteurs de charge (34) à inclure dans l'ensemble porteur de charge (30) et la sélection d'une résistance de chacun des éléments porteurs de charge (34).
